# EUROPEAN PATENT SPECIFICATION

(11) **EP 3 225 522 B1**
(45) Date of publication and mention of the grant of the patent: **10.06.2020**
(21) Application number: 17163257.3
(22) Date of filing: 28.03.2017
(51) Int. Cl.: B62K 11/00, H01M 8/00, B62M 7/04

(54) **SADDLE-RIDE TYPE VEHICLE**
SATTELFAHRZEUG
VÉHICULE DE TYPE À SELLE

(30) Priority: 31.03.2016 JP 2016071511; 29.09.2016 JP 2016191770
(43) Date of publication of application: 04.10.2017
(73) Proprietor: Honda Motor Co., Ltd., Minato-ku, Tokyo 107-8556 (JP)
(72) Inventor: Yamamoto, Kanta, Saitama, 351-0193 (JP); Yoshida, Naoki, Saitama, 351-0193 (JP); Takano, Masayoshi, Saitama, 351-0193 (JP); Yamaguchi, Shigehiro, Saitama, 351-0193 (JP)
(74) Representative: Kiwit, Benedikt

(56) References cited:
- JP-A- 2007 118 666
- JP-A- 2009 184 589
- US-A1- 2006 040 154
- US-A1- 2007 084 654

## Description

### BACKGROUND OF THE INVENTION

### FIELD OF THE INVENTION

The present invention relates to a saddle-ride type vehicle provided with a fuel cell.

### DESCRIPTION OF THE RELATED ART

A saddle-ride type vehicle provided with a fuel cell is generally known. For example, as described in Japanese Patent Application Laid-open No. 2009-78622, a saddle-ride type vehicle is provided with a fuel cell that generates electric power on the basis of chemical reaction of hydrogen and oxygen in the air. An air-cooled type cooling system is combined with the fuel cell. The cooling system exhausts exhaust gas from an exhaust port of air open at the bottom inclined to rise backward of the fuel cell.

In the saddle-ride type vehicle disclosed in Japanese Patent Application Laid-open No. 2009-78622, exhaust air from the exhaust port at the bottom hits on a component on the downside and efficient ventilation is not realized. Consequently, big power is required for a cooling fan in the cooling system in order to take air from an intake.

Document US 2006/040154, also known from the prior art, shows all the features of the preamble of independent claim 1.

### SUMMARY OF THE INVENTION

The present invention has been achieved in view of the above-mentioned circumstances, and it is an object thereof to provide a saddle-ride type vehicle that enables realizing more efficient ventilation in utilizing a fuel cell.

In order to achieve the object, according to a first feature of the present invention, there is provided a saddle-ride type vehicle, comprising: a body frame including right and left main frames and a seat frame, the right and left main frames extending from a head pipe steerably supporting a front fork to a pair of right and left pivot frames supporting a rear wheel unit swingably around a pivot, the seat frame extending backward above a rear wheel and supporting an occupant's seat for an occupant to straddle; and an air-cooled fuel cell unit mounted on the body frame at a back of the head pipe and in front of the pivot frame, the fuel cell unit using taken-in outside air for supplying oxygen and cooling a unit, wherein the fuel cell unit includes an exhaust port open backward above the pivot, and the seat frame forms a tubular body mounted on the main frames and guiding exhaust gas from the fuel cell unit to a back of the occupant's seat.

With the first feature, as a linear ventilation path is built from the fuel cell unit to an exhaust vent of the tubular body at the back of the fuel cell unit, efficient ventilation structure is realized in exhaust of outside air. In addition, as the tubular body for guiding exhaust gas supports the occupant's seat, a member such as a seat rail proper to the occupant's seat can be omitted and the saddle-ride type vehicle can be lightened.

According to a second feature of the present invention, in addition to the first feature, there is provided the saddle-ride type vehicle, further comprising a fuel tank connected to the fuel cell unit and extended backward and, the fuel tank being housed in the tubular body and supplying stored high-pressure hydrogen to the fuel cell unit.

With the second feature, while the fuel cell unit is operated, the fuel tank is cooled because of adiabatic expansion, however, cooling effect is softened by exhaust heat from the fuel cell unit.

According to a third feature of the present invention, in addition to the second feature, the seat frame comprises: a lower body receiving a whole load applied to the seat frame and supporting the fuel tank; and an upper body receiving a load from the occupant's seat and covering an upside of the fuel tank, the upper body being detachable from the lower body in a state of a completed vehicle.

With the third feature, sub-assembly of the fuel tank is possible on the lower body of the seat frame and in addition, maintenance can be readily realized in a state of the completed vehicle.

According to a fourth feature of the present invention, in addition to the second feature or the third feature, the seat frame is configured with a conductive member.

With the fourth feature, as potential is scattered (grounding effect) from the seat frame via the main frames, the generation of static electricity in the vicinity of the fuel tank can be inhibited.

According to a fifth feature of the present invention, in addition to any one of the second feature to the fourth feature, the seat frame includes an opening-closing portion above a pressure regulator provided to a fuel supply path connecting the fuel cell unit with the fuel tank.

With the fifth feature, even if fuel (for example, gaseous fuel such as hydrogen) should leak, fuel can be exhausted outside the vehicle by opening the opening-closing portion.

According to a sixth feature of the present invention, in addition to any one of the first feature to the fifth feature, a front end of the seat frame is fitted to a frame body partitioning the exhaust port.

With the sixth feature, exhaust gas of the fuel cell unit securely flows into the seat frame.

According to a seventh feature of the present invention, in addition to the sixth feature, a sealing member is held between the frame body and the seat frame.

With the seventh feature, as hot air is prevented from leaking between the fuel cell unit and the seat frame, marketability is enhanced. Additionally, vibration of the seat frame can be absorbed by the sealing member and vibration transmitted from the seat frame to the fuel cell unit can be inhibited.

According to an eighth feature of the present invention, in addition to the sixth feature or the seventh feature, the seat frame includes attachment portions attached to the right and left main frames and provided outside the front end of the seat frame.

With the eighth feature, as exhaust gas exhausted backward from the fuel cell unit is smoothly guided at the back of the vehicle and the seat frame is mounted on the right and left body frames, rigidity is enhanced. The seat frame can also function as a cross frame.

The above and other objects, characteristics and advantages of the present invention will be clear from detailed descriptions of the preferred embodiment which will be provided below while referring to the attached drawings.

### BRIEF DESCRIPTION OF THE DRAWINGS

FIG. 1 is a side view schematically showing an entire configuration of a saddle-ride type vehicle, that is, a two-wheeled motor vehicle, according to one embodiment of the present invention.
FIG. 2 is a side view schematically showing a whole figure of the two-wheeled motor vehicle in a state in which a body cover is removed.
FIG. 3 is an exploded perspective view of a body frame.
FIG. 4 is an enlarged horizontally sectional view viewed along a line 4-4 in FIG. 1.
FIG. 5 is a side view schematically showing a ventilation path in the two-wheeled motor vehicle.
FIG. 6 is a perspective view schematically showing a fitting relationship between a fuel cell unit and a seat frame.

### DESCRIPTION OF THE PREFERRED EMBODIMENT

Referring to the attached drawings, one embodiment of the present invention will be described below.

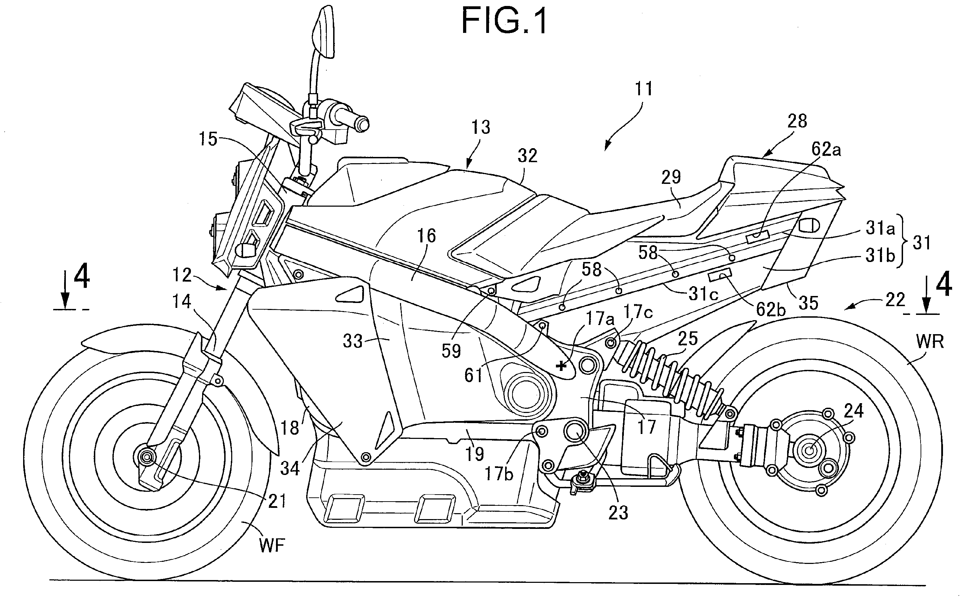

FIG. 1 is a schematic diagram showing a saddle-ride type vehicle, that is, a two-wheeled motor vehicle, according to one embodiment of the present invention. The two-wheeled motor vehicle (the saddle-ride type vehicle) 11 is provided with a body frame 12 and a body cover 13 mounted on the body frame 12. The body frame 12 is provided with a head pipe 15 for steerably supporting a front fork 14, a pair of right and left main frames 16 being extended from the head pipe 15 backward and downward at a first angle with respect to a horizontal plane, a pair of right and left pivot frames 17 being connected to rear ends of the main frames 16 at first connections 17a and extended downward from rear ends of the main frames 16, a pair of right and left down frames 18 being extended downward at a second angle with respect to the horizontal plane from the head pipe 15, the second angle being larger than the first angle, and a pair of right and left lower frames 19 being extended from rear ends of the down frames 18, the pair of lower frames 19 being connected to the pivot frames 17 at second connections 17b below first connections 17a. A front wheel WF is supported rotatably around an axle 21 by the front fork 14.

The two-wheeled motor vehicle 11 is provided with a rear wheel unit 22. The rear wheel unit 22 is coupled to the pivot frame 17 via a pivot 23 extended horizontally. The rear wheel unit 22 is supported swingably in the up-down direction around the pivot 23 by the pivot frames 17. A rear wheel WR is supported rotatably around an axle 24 parallel to the pivot 23 by a free end of the rear wheel unit 22. A rear cushion 25 is installed between the body frame 12 and the rear wheel unit 22. One end of the rear cushion 25 is coupled to the pivot frames 17 at third connections 17c provided above the pivot 23. The transmission of vibration from the rear wheel WR to the body frame 12 is inhibited when the rear cushion 25 regulates fluctuation of the rear wheel unit 22 for the body frame 12. The rear wheel unit 22 is connected to the rear wheel WR and provided with an electric motor 26 for driving the rear wheel WR on the basis of supplied electric power.

The two-wheeled motor vehicle 11 is provided with a fuel supply assembly 28. The fuel supply assembly 28 is coupled to the main frame 16 above the pivot frame 17. The fuel supply assembly 28 is provided with a seat frame 31 being extended backward above the rear wheel WR from the main frames 16, the seat frame 31 supporting an occupant's seat 29. The seat frame 31 is configured with a tubular body that guides exhaust gas from a fuel cell unit to the back of the occupant's seat 29 as described later. The tubular body has a monocoque structure that also functions as an exhaust duct.

The seat frame 31 is provided with an upper body 31a and a lower body 31b. The upper body 31a and the lower body 31b are made of conductive material such as carbon. The upper body 31a and the lower body 31b are mutually connected. A connecting face 31c of the upper body 31a and the lower body 31b is provided to both sides from the main frames 16 side to a rear end. The occupant's seat 29 is mounted on the upper body 31a. An occupant rides on the occupant's seat 29. A load from the occupant's seat 29 is applied to the upper body 31a of the seat frame 31. The whole load applied to the seat frame 31 is applied to the lower body 31b of the seat frame 31. The upper body 31a is detachably connected to the lower body 31b in a state of a completed vehicle. A fastener such as a screw 58 is used for connecting. The upper body 31a includes the attachment portion 59 connected to the main frame 16 in front of the first connection 17a. A fastener such as a screw is used for connecting. The lower body 31b is provided with an attachment portion 61 connected to the main frame 16 between the first connection 17a and the attachment portion 59. A fastener such as a screw is used for connecting.

Openings 62a, 62b are respectively formed in outermost parts in a direction of vehicle width of the upper body 31a and the lower body 31b at the back of the occupant's seat 29. Each opening 62a, 62b connects the inside and the outside of the exhaust duct. For example, when the two-wheeled motor vehicle 11 is placed laterally, light gas in the exhaust duct can be promptly exhausted outside via the openings 62a, 62b. Even if hydrogen should leak, the hydrogen can be promptly exhausted outside the vehicle.

The body cover 13 includes an upper cover 32 connected to the upsides of the right and left main frames 16 in common, a side cover 33 connected to each individual main frame 16 on the downside of the main frame 16, an air-guiding plate 34 extended forward from a rear end connected to the side cover 33 and a rear cover 35 covering the seat frame 31 at the back of the occupant's seat 29. The upper cover 32 is connected to the main frames 16 in a state that the upper cover 32 straddles the two main frames 16 from the upside. The rear cover 35 has an exhaust vent 54b at a rear end of the seat frame 31.

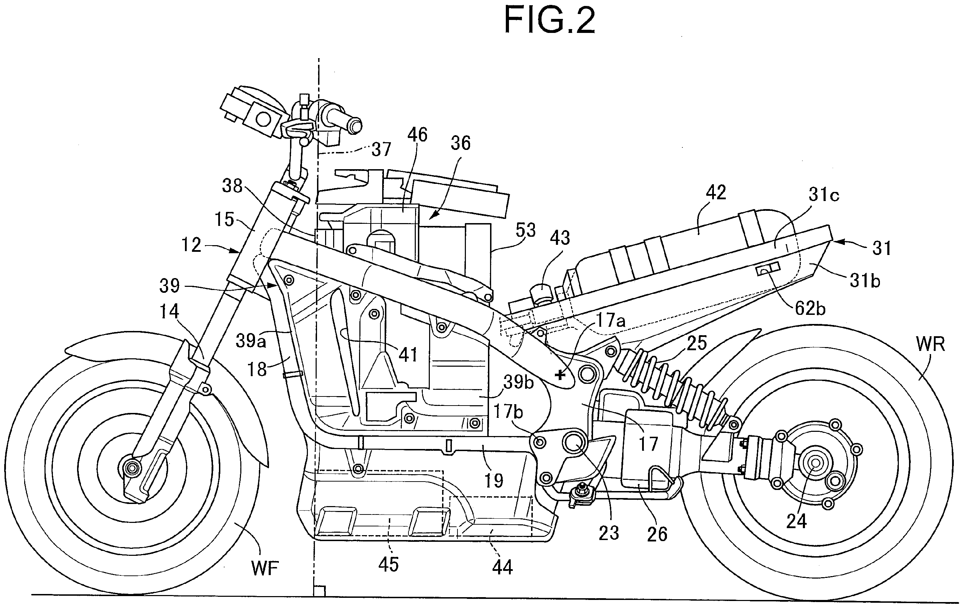

As shown in FIG. 2, a fuel cell unit 36 is mounted on the body frame 12. The fuel cell unit 36 is supported by an upper hanger plate 46 described later from the upside at the back of the head pipe 15 and is supported by the pair of right and left lower frames 19 from the downside. As described above, the fuel cell unit 36 is mounted on the body frame 12 at the back of the head pipe 15 and in front of the pivot frame 17. The down frames 18 are extended in front of the fuel cell unit 36. The fuel cell unit 36 has an outside air intake 38 disposed along an imaginary plane 37 perpendicular to a ground surface, extending in a lateral direction of the vehicle, and facing forward. In the fuel cell unit 36, electric power is generated on the basis of chemical reaction of hydrogen and oxygen in the air. The fuel cell unit 36 utilizes atmospheric air flowing in from the intake 38 in supply of oxygen and cooling.

A frame cover 39 is coupled to the body frame 12. The frame cover 39 is provided with a front wall 39a and a side wall 39b extended toward the rear of the vehicle from both right and left edges of the front wall 39a. An intake port 41 is partitioned in the side wall 39b.

A cylindrical fuel tank 42 is mounted on the body frame 12. The fuel tank 42 is extended backward from a pressure regulator 43 connected to the fuel cell unit 36. The fuel tank 42 stores high-pressure hydrogen. The lower body 31b of the seat frame 31 supports the fuel tank 42 from the downside. The fuel tank 42 is housed inside the seat frame 31.

A controller 44 is mounted on the body frame 12. The controller 44 is arranged below the fuel tank 42 and in front of the rear wheel WR. The controller 44 supplies, to the electric motor 26, electric power supplied from the fuel cell unit 36.

A secondary cell 45 is mounted on the body frame 12. The secondary cell 45 is arranged side by side below the fuel cell unit 36 and in front of the controller 44. The secondary cell 45 charges and discharges electric power according to control of the controller 44.

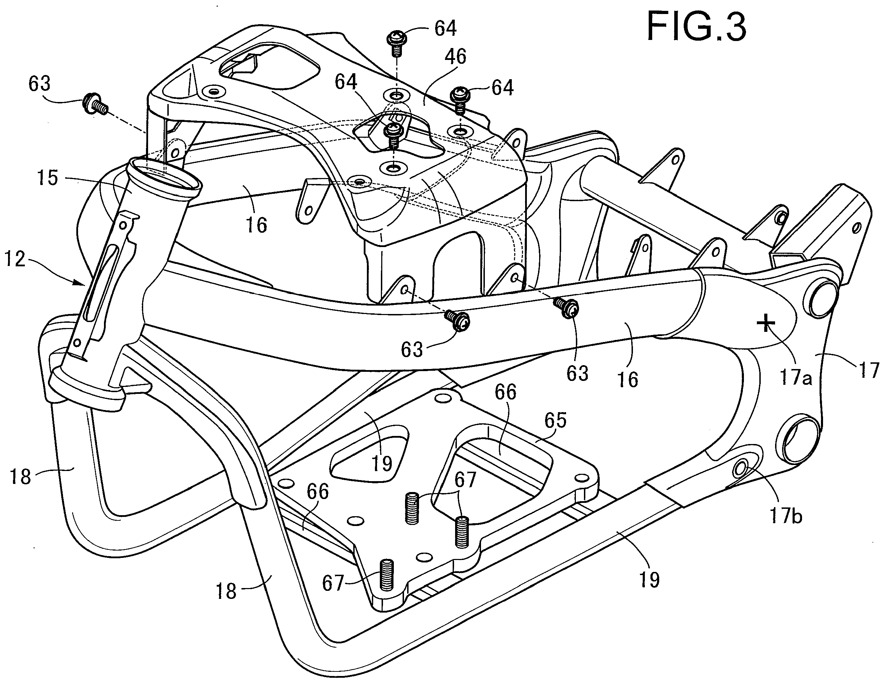

As shown in FIG. 3, the body frame 12 is further provided with the upper hanger plate 46 and a lower hanger plate 65. The upper hanger plate 46 is coupled to the right and left main frames 16 in a state that the upper hanger plate 46 straddles the upside of the fuel cell unit 36. In coupling, a fastener such as a screw 63 is used. An upper end of the fuel cell unit 36 is connected to the upper hanger plate 46. In connecting, a fastener such as a screw 64 is used. The upper hanger plate 46 connects the fuel cell unit 36 to the main frames 16.

The lower hanger plate 65 is coupled to the right and left lower frames 19 below the fuel cell unit 36. In coupling, a pair of front and rear cross bars 66 are fixed to the right and left lower frames 19. The individual cross bar 66 is horizontally extended laterally from the lower frames 19. The lower hanger plate 65 is fastened to the cross bars 66 by screws. At this time, an elastic member such as a rubber bush is held between the cross bar 66 and the lower hanger plate 65. A lower end of the fuel cell unit 36 is connected to the lower hanger plate 65. In connecting, a screw 67 is screwed into the lower hanger plate 65 from the downside. The lower hanger plate 65 connects the fuel cell unit 36 to the main frame 16.

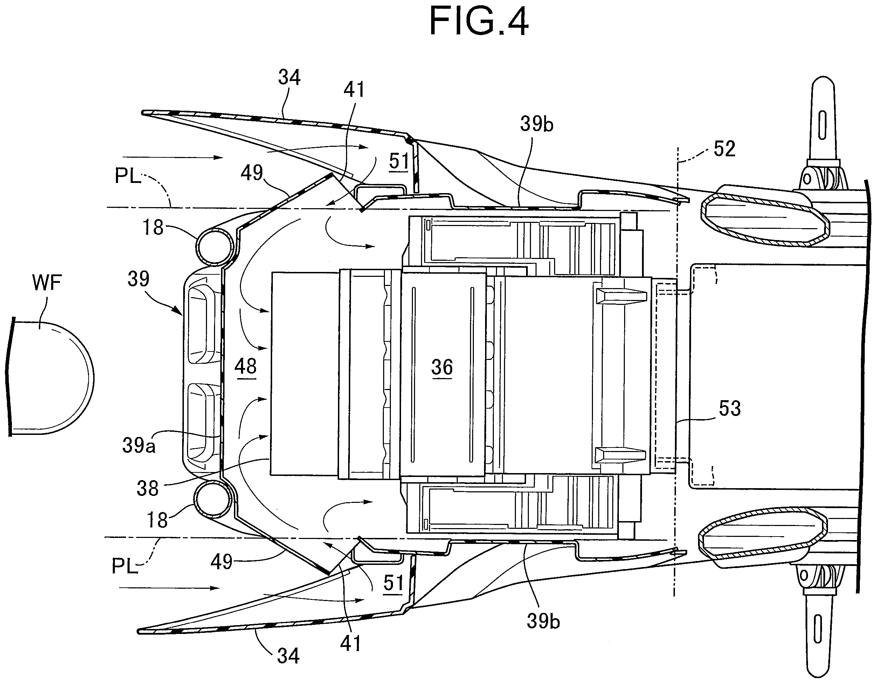

As shown in FIG. 4, the frame cover 39 covers the front side of the intake 38, partitioning an air intake space 48 in front of the intake 38. The intake port 41 is open to the rear side, communicating with the air intake space 48. In forming the intake port 41, a shielding plate 49 more distant from an imaginary plane PL including the side wall 39b toward the rear side is arranged in an opening of the side wall 39b. The intake port 41 is formed between a rear end of the shielding plate 49 and the side wall 39b.

The air-guiding plate 34 is connected to the frame cover 39 at the back of the intake port 41. The air-guiding plate 34 is open forward so as to form an introduction space 51 for introducing traveling wind from the front side in a position opposite to the intake port 41, the air-guiding plate 34 being provided to cover each lateral side of the intake port 41 and the shielding plate 49.

The fuel cell unit 36 is provided with an exhaust port 53 open rearward along an imaginary plane 52 perpendicular to the ground surface and extending in the lateral direction of the vehicle. As described above, the fuel cell unit 36 is provided with the outside air intake 38 open to the front side of the vehicle at the back of and below an upper end of the head pipe 15 and the exhaust port 53 open rearward in front of and above the pivot 23. In the fuel cell unit 36, an airflow is circulated from the intake 38 toward the exhaust port 53 by effect of a fan unit built in the fuel cell unit 36.

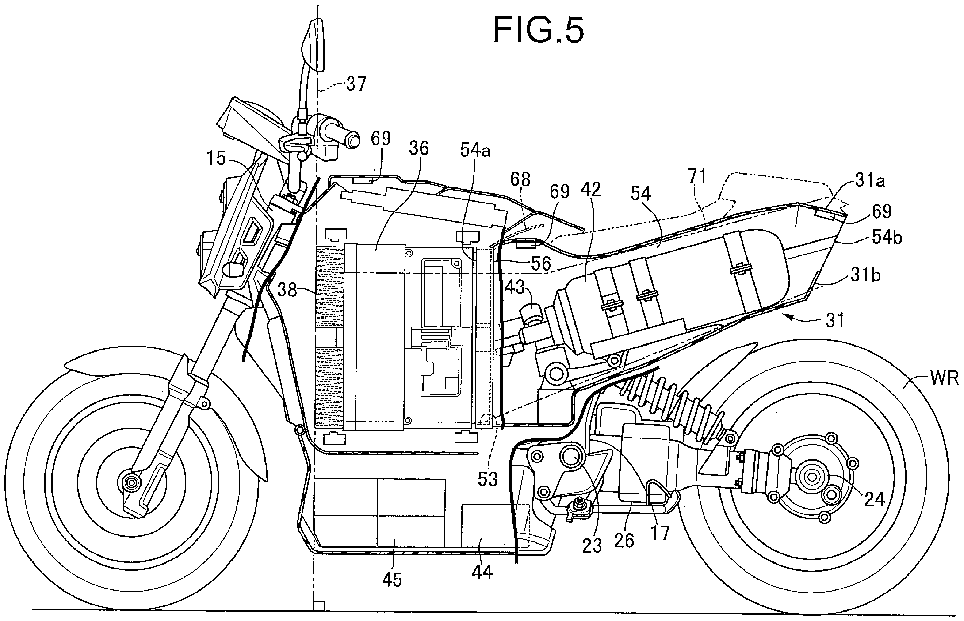

As shown in FIG. 5, the seat frame 31 configures an exhaust duct. As the exhaust duct partitions a ventilation duct 54 between the upper body 31a and the lower body 31b. The ventilation duct 54 is open at an inlet 54a at a front end and is extended to an exhaust vent 54b of the rear cover 35 at a rear end. The fuel tank 42 is housed in the exhaust duct.

A hydrogen sensor 69 is respectively arranged inside the upper cover 32, in the vicinity of the inlet 54a of the exhaust duct (inside an opening-closing portion 68 described later) and in the vicinity of the exhaust vent 54b of the exhaust duct (inside the rear cover 35). The hydrogen sensor 69 is arranged in the uppermost area of a cavity. When hydrogen exceeding predetermined concentration is detected by any hydrogen sensor 69, an indicator (not shown) is lit and the indicator tells an occupant the detection, and control for closing the pressure regulator 43 is performed.

The seat frame 31 is provided with the opening-closing portion 68 above the pressure regulator 43. The opening-closing portion 68 is provided with a hatch for opening and closing an opening for connecting the inside and the outside of the exhaust duct. When the opening-closing portion 68 is opened, gas in the exhaust duct can be emitted outside. Even if hydrogen should accumulate in front side of the exhaust duct, the hydrogen can be promptly exhausted outside the vehicle.

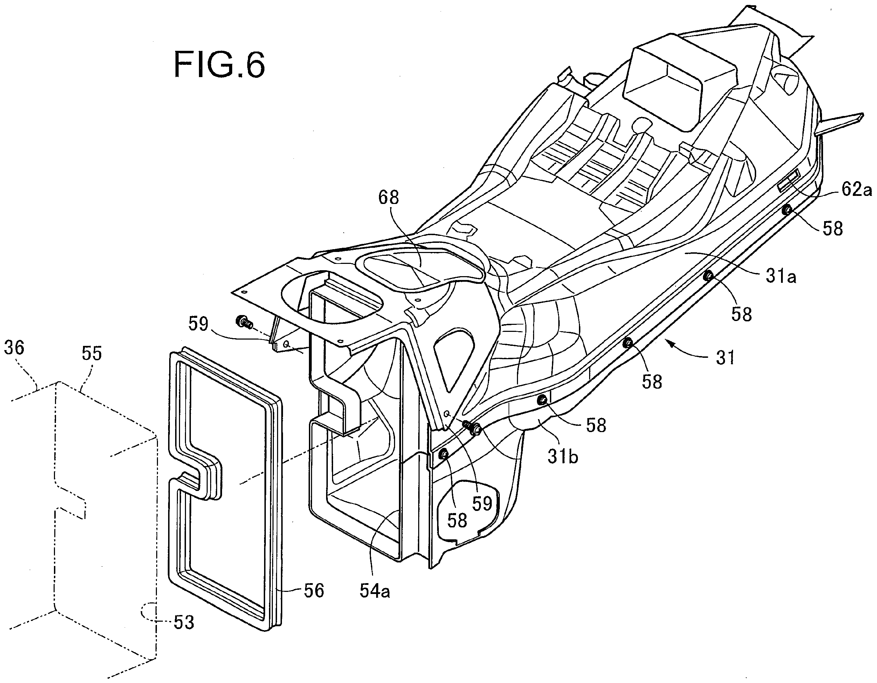

As shown in FIG. 6, the inlet 54a at a front end of the exhaust duct is fitted to a frame body 55 for partitioning the exhaust port 53 of the fuel cell unit 36. A sealing member 56 is held between the frame body 55 and the seat frame (the exhaust duct) 31. The sealing member 56 is made of flexible rubber material for example.

The outside air intake 38 of the fuel cell unit 36 mounted on the body frame 12 is open to the front side of the vehicle at the back of and below the upper end of the head pipe 15, and the exhaust port 53 of the fuel cell unit 36 is open rearward in front of and above the pivot 23. The seat frame 31 has the monocoque structure also having a configuration of the exhaust duct for guiding exhaust gas from the fuel cell unit 36 to the back of the occupant's seat 29. As shown in FIG. 5, as a linear ventilation path is built in a longitudinal direction of the vehicle from the intake 38 of the fuel cell unit 36 to the exhaust vent 54b of the exhaust duct, efficient ventilation structure in taking outside air in is realized. In addition, as the seat frame 31 forming the tubular body for guiding exhaust gas supports the occupant's seat 29, a member such as a metal seat rail proper to the occupant's seat 29 can be omitted and the two-wheeled motor vehicle 11 can be lightened.

In the two-wheeled motor vehicle 11, the fuel tank 42 is extended backward from the fuel cell unit 36 and the fuel tank 42 is housed in the exhaust duct. While the fuel cell unit 36 is operated, the fuel tank 42 is cooled because of adiabatic expansion, however, cooling effect is softened by exhaust heat from the fuel cell unit 36.

The front end of the seat frame 31, that is, the exhaust duct is fitted to the frame body 55 of the exhaust port 53. Accordingly, exhaust gas of the fuel cell unit 36 securely flows into the exhaust duct of the seat frame 31. In addition, the sealing member 56 is held between the frame body 55 and the seat frame 31 (the exhaust duct). Air leakage is prevented between the fuel cell unit 36 and the exhaust duct. Additionally, the vibration of the seat frame 31 can be absorbed by the sealing member 56 and vibration transmitted from the seat frame 31 to the fuel cell unit 36 can be inhibited.

The seat frame 31 is provided with the lower body 31b and the upper body 31a as described above. The upper body 31a can be separated from the lower body 31b in a state of the completed vehicle. Accordingly, sub-assembly of the fuel tank 42 is possible on the lower body 31b of the seat frame 31 and in addition, in a state of the completed vehicle, maintenance can be readily realized.

## Claims

1. A saddle-ride type vehicle, comprising:
a body frame (12) including right and left main frames (16) and a seat frame (31), the right and left main frames (16) extending from a head pipe (15) steerably supporting a front fork (14) to a pair of right and left pivot frames (17) supporting a rear wheel unit (22) swingably around a pivot (23), the seat frame (31) extending backward above a rear wheel (WR) and supporting an occupant's seat (29) for an occupant to straddle; and
an air-cooled fuel cell unit (36) mounted on the body frame (12) at a back of the head pipe (15) and in front of the pivot frame (17), the fuel cell unit (36) using taken-in outside air for supplying oxygen and cooling a unit,
wherein the fuel cell unit (36) includes an exhaust port (53) open backward above the pivot (23), and **characterised in that**
the seat frame (31) forms a tubular body mounted on the main frames (16) and guiding exhaust gas from the fuel cell unit (36) to a back of the occupant's seat (29).

2. The saddle-ride type vehicle according to Claim 1, further comprising
a fuel tank (42) connected to the fuel cell unit (36) and extended backward, the fuel tank (42) being housed in the tubular body and supplying stored high-pressure hydrogen to the fuel cell unit (36).

3. The saddle-ride type vehicle according to Claim 2, wherein
the seat frame (31) comprises:
a lower body (31b) receiving a whole load applied to the seat frame (31) and supporting the fuel tank (42); and
an upper body (31a) receiving a load from the occupant's seat (29) and covering an upside of the fuel tank (42), the upper body (31a) being detachable from the lower body (31b) in a state of a completed vehicle.

4. The saddle-ride type vehicle according to Claim 2 or 3, wherein the seat frame (31) is configured with a conductive member.

5. The saddle-ride type vehicle according to any one of Claims 2 to 4, wherein the seat frame (31) includes an opening-closing portion above a pressure regulator (43) provided to a fuel supply path connecting the fuel cell unit (36) with the fuel tank (42).

6. The saddle-ride type vehicle according to any one of Claims 1 to 5, wherein a front end of the seat frame (31) is fitted to a frame body (55) partitioning the exhaust port (53).

7. The saddle-ride type vehicle according to Claim 6, wherein a sealing member (56) is held between the frame body (55) and the seat frame (31).

8. The saddle-ride type vehicle according to Claim 6 or 7, wherein the seat frame (31) includes attachment portions (59, 61) attached to the right and left main frames (16) and provided outside the front end of the seat frame (31).

9. The saddle-ride type vehicle according to claim 3 or according to claim 3 in combination with any one of Claims 4 to 8, wherein the seat frame (31) with the tubular body defines an exhaust duct partitioning a ventilation duct (54) between the upper body (31a) and the lower body (31b), the exhaust duct having an inlet (54a) at a front end thereof and an exhaust vent (54b) at a rear end thereof, the inlet (54a) being connected to the exhaust port (53) of the fuel cell unit (36).

## Patentansprüche

1. Fahrzeug des Sattelsitztyps, das aufweist:
einen Karosserierahmen (12), der rechte und linke Hauptrahmen (16) und einen Sitzrahmen (31) aufweist, wobei die linken und rechten Hauptrahmen (16) von einem Kopfrohr (15), das lenkbar eine Vordergabel (14) hält, zu einem Paar von rechten und linken Schwenkarmen (17) verlaufen, die eine Hinterradeinheit (22) um ein Gelenk (23) schwingbar halten, wobei der Sitzrahmen (31) über einem Hinterrad (WR) nach hinten verläuft und einen Sitz eines Fahrers (29) hält, damit ein Fahrer rittlings darauf sitzen kann; und
eine luftgekühlte Brennstoffzelleneinheit (36), die am Karosserierahmen (12) an einer Rückseite des Kopfrohrs (15) und vor dem Schwenkrahmen (17) angebracht ist, wobei die Brennstoffzelleneinheit (36) eingeleitete Außenluft verwendet, um Sauerstoff zuzuführen und eine Einheit zu kühlen,
wobei die Brennstoffzelleneinheit (36) eine Auslassöffnung (53) aufweist, die nach hinten über dem Gelenk (23) geöffnet ist,
und **dadurch gekennzeichnet, dass**
der Sitzrahmen (31) einen röhrenförmigen Körper bildet, der an den Hauptrahmen (16) angebracht ist und Abgas von der Brennstoffzelleneinheit (36) zu einer Rückseite des Sitzes des Fahrers (29) leitet.

2. Fahrzeug des Sattelsitztyps nach Anspruch 1, das weiterhin aufweist
einen Kraftstofftank (42), der mit der Brennstoffzelleneinheit (36) verbunden ist und nach hinten verläuft, wobei der Kraftstofftank (42) im röhrenförmigen Körper aufgenommen ist und Hochdruckwasserstoff an die Brennstoffzelleneinheit (36) zuleitet.

3. Fahrzeug des Sattelsitztyps nach Anspruch 2, wobei der Sitzrahmen (31) aufweist:
einen unteren Körper (31b), der eine Gesamtlast aufnimmt, die auf den Sitzrahmen (31) ausgeübt wird, und den Kraftstofftank (42) hält; und
ein oberen Körper (31a), der eine Last vom Sitz des Fahrers (29) aufnimmt und eine Oberseite des Kraftstofftanks (42) abdeckt, wobei der obere Körper (31a) vom unteren Körper (31b) in einem Zustand eines vollständigen Fahrzeugs entfernbar ist.

4. Fahrzeug des Sattelsitztyps nach Anspruch 2 oder 3, wobei der Sitzrahmen (31) mit einem leitfähigen Element ausgestaltet ist.

5. Fahrzeug des Sattelsitztyps nach einem der Ansprüche 2 bis 4, wobei der Sitzrahmen (31) einen Öffnungs-Schließ-Bereich über einen Druckregler (43) aufweist, der an einem Kraftstoffzuleitungspfad vorgesehen ist, der die Brennstoffzelleneinheit (36) mit dem Kraftstofftank (42) verbindet.

6. Fahrzeug des Sattelsitztyps nach einem der Ansprüche 1 bis 5,
wobei ein vorderes Ende des Sitzrahmens (31) am Rahmenkörper (55) eingepasst ist, das die Auslassöffnung (53) unterteilt.

7. Fahrzeug des Sattelsitztyps nach Anspruch 6, wobei ein Dichtungselement (56) zwischen dem Karosserierahmen (55) und dem Sitzrahmen (31) gehalten wird.

8. Fahrzeug des Sattelsitztyps nach Anspruch 6 oder 7,
wobei der Sitzrahmen (31) Anbringungsbereiche (59, 61) aufweist, die an den linken und rechten Hauptrahmen (60) befestigt sind und außerhalb des vorderen Endes des Sitzrahmens (31) vorgesehen sind.

9. Fahrzeug des Sattelsitztyps nach Anspruch 3 oder nach Anspruch 3 in Kombination mit einem der Ansprüche 4 bis 8, wobei der Sitzrahmen (31) mit dem röhrenförmigen Körper einen Auslasskanal definiert, der einen Belüftungskanal (54) zwischen dem oberen Körper (31a) und dem unteren Körper (31b) definiert, wobei der Auslasskanal einen Einlass (54a) am vorderen Ende davon und eine Abluftentlüftungsöffnung (54b) am hinteren Ende davon hat, wobei der Einlass (54a) mit der Auslassöffnung (53) der Brennstoffzelleneinheit (36) verbunden ist.

## Revendications

1. Véhicule de type à enfourcher, comprenant :
un châssis de carrosserie (12) comportant des châssis principaux droit et gauche (16) et un châssis de siège (31), les châssis principaux droit et gauche (16) s'étendant d'un tube frontal (15) supportant de manière directionnelle une fourche avant (14) à une paire de châssis pivotants droit et gauche (17) supportant une unité de roue arrière (22) de manière basculante autour d'un pivot (23), le châssis de siège (31) s'étendant vers l'arrière au-dessus d'une roue arrière (WR) et supportant un siège d'un occupant (29) à chevaucher par un occupant ; et
une unité de pile à combustible refroidie par air (36) montée sur le châssis de carrosserie (12) au niveau d'un arrière du tube frontal (15) et devant le châssis pivotant (17), l'unité de pile à combustible (36) utilisant de l'air extérieur admis pour fournir de l'oxygène et refroidir une unité,
dans lequel l'unité de pile à combustible (36) comporte un orifice d'échappement (53) ouvert vers l'arrière au-dessus du pivot (23), et **caractérisé en ce que**
le châssis de siège (31) forme un corps tubulaire monté sur les châssis principaux (16) et guidant un gaz d'échappement de l'unité de pile à combustible (36) à un arrière du siège de l'occupant (29).

2. Véhicule de type à enfourcher selon la revendication 1, comprenant en outre un réservoir de combustible (42) relié à l'unité de pile à combustible (36) et étendu vers l'arrière, le réservoir de combustible (42) étant logé dans le corps tubulaire et fournissant de l'hydrogène à haute pression stocké à l'unité de pile à combustible (36).

3. Véhicule de type à enfourcher selon la revendication 2, dans lequel
le châssis de siège (31) comprend :
un corps inférieur (31b) recevant une charge totale appliquée au châssis de siège (31) et supportant le réservoir de combustible (42) ; et
un corps supérieur (31a) recevant une charge depuis le siège de l'occupant (29) et couvrant un dessus du réservoir de combustible (42), le corps supérieur (31a) pouvant être détaché du corps inférieur (31b) dans un état d'un véhicule achevé.

4. Véhicule de type à enfourcher selon la revendication 2 ou 3, dans lequel le châssis de siège (31) est configuré avec un organe conducteur.

5. Véhicule de type à enfourcher selon l'une quelconque des revendications 2 à 4, dans lequel le châssis de siège (31) comporte une portion d'ouverture-fermeture au-dessus d'un régulateur de pression (43) pourvu d'un trajet d'alimentation en combustible reliant l'unité de pile à combustible (36) au réservoir de combustible (42).

6. Véhicule de type à enfourcher selon l'une quelconque des revendications 1 à 5, dans lequel une extrémité avant du châssis de siège (31) est adaptée sur un corps de châssis (55) cloisonnant l'orifice d'échappement (53).

7. Véhicule de type à enfourcher selon la revendication 6, dans lequel un organe d'étanchéité (56) est maintenu entre le corps de châssis (55) et le châssis de siège (31).

8. Véhicule de type à enfourcher selon la revendication 6 ou 7, dans lequel le châssis de siège (31) comporte des portions d'attache (59, 61) attachées aux châssis principaux droit et gauche (16) et prévues à l'extérieur de l'extrémité avant du châssis de siège (31).

9. Véhicule de type à enfourcher selon la revendication 3 ou selon la revendication 3 en combinaison avec l'une quelconque des revendications 4 à 8, dans lequel le châssis de siège (31) avec le corps tubulaire définit un conduit d'échappement cloisonnant un conduit de ventilation (54) entre le corps supérieur (31a) et le corps inférieur (31b), le conduit d'échappement ayant une entrée (54a) au niveau d'une extrémité avant de celui-ci et un évent d'échappement (54b) au niveau d'une extrémité arrière de celui-ci, l'entrée (54a) étant reliée à l'orifice d'échappement (53) de l'unité de pile à combustible (36).
